(19) Europäisches Patentamt

European Patent Office

Office européen des brevets

(11) **EP 0 745 747 A1**

(12) **EUROPEAN PATENT APPLICATION**

(43) Date of publication:
04.12.1996 Bulletin 1996/49

(21) Application number: 96108202.1

(22) Date of filing: 23.05.1996

(51) Int. Cl.$^6$: **E05B 49/00**, **B60R 25/04**, **H04L 27/06**, **H04L 27/227**, **H04L 25/06**

(84) Designated Contracting States:
DE FR IT NL

(30) Priority: 27.05.1995 GB 9510828

(71) Applicant: **MOTOROLA, INC.**
Schaumburg, IL 60196 (US)

(72) Inventors:
• **Burri, Michel**
1218 Gd-Saconnex (CH)

• **Renard, Pascal**
74100 Ve'traz-Monthoux (FR)

(74) Representative: **Hudson, Peter David et al**
**Motorola,**
**European Intellectual Property Operations,**
**Midpoint**
**Alencon Link**
**Basingstoke, Hampshire RG21 7PL (GB)**

(54) **A data transfer system and a demodulator therefor**

(57) A data transfer circuit includes a reader including a coil (4), a control circuit and a voltage source (27) for applying voltage at a carrier frequency to the coil (4) and a key (2) including a coil (3) for receiving energy from and transmitting data to coil (4) by magnetic coupling and a control circuit (8). The reader includes a demodulator circuit (31) having an input terminal (24) coupled to coil (4), a sample and hold circuit (35) for sampling the voltage at the input terminal (24) and a delay control unit (38) for controlling the sampling of the voltage to take place at the carrier frequency. An averaging circuit (60, 61) provides an average sampled voltage signal to one input (59) of a comparator (58) whose other input (57) is coupled to the output of the sample and hold circuit (35) so that the sampled voltage is compared with the average sampled voltage signal and the comparator (58) provides an output indicating a change in the sampled voltage.

FIG. 3

## Description

Field Of The Invention

This invention relates to a data transfer system, particularly, though not exclusively, to a short range contactless data transfer system, and to a demodalator for such a system.

Background Of The Invention

Short range contactless data transfer systems generally involve the provision of energy from a controller, usually called a reader, by magnetic coupling to a transponder, for example a tag or key or card to provide power for the tag to transfer data to the controller. Such systems are used in a number of applications, such as anti-theft systems, especially for vehicles, where the tag is part of the car key and transfers coded data to the controller in the vehicle to identify the key so that the controller unlocks or authorises use of the vehicle or the engine. In some cases, the data in the tag is then recoded so that it will be different the next time the tag is used. Other applications using such coded tags are in material handling and/or identification, for example, airport baggage handling, remote metering, for example, non-stop road toll systems, ticketing, for example, passenger payment monitoring through transport systems, and various other applications.

In general, in such systems, energy is provided by the reader into an electrical coil so as to develop an oscillating magnetic field into which the tag passes. The tag includes a small coil which transfers power from the magnetic field into a current to power integrated circuit(s) in the tag. The tag circuit then powers up and transfers data to the reader by switching a load in the tag so as to affect the transfer of energy between the reader coil and the tag coil. These changes are detected by the reader to obtain the data.

Such systems utilise a voltage having a carrier frequency on the reader coil, these changes are detected as very small changes in either the amplitude, phase or frequency of the voltage on the reader coil. These modalations must be demodulated by the reader, which has necessitated filtering the voltage signal in the reader coil read by the reader to remove the carrier frequency. Such filtering has required a relatively large number of discrete, and consequently expensive extra components. Furthermore, in order to allow for digital demodalation, the sampling rate has had to be relatively high since it must be able to demodulate the complete bandwidth of the analog voltage signal, which requires relatively high computing power.

It is therefore an object of the present invention to provide a demodulator suitable for a reader which overcomes, or at least reduces, the disadvantages of the prior art.

Brief Summary Of The Invention

Accordingly, in one aspect, the invention provides a demodulator circuit comprising an input terminal for receiving a modulated data signal, a sample and hold circuit having an input coupled to the input terminal for sampling the voltage at the input terminal, a delay control unit coupled to the sample and hold circuit for controlling the sampling of the voltage at the input terminal to take place at a predetermined frequency, an averaging circuit coupled to an output of the sample and hold circuit for providing an average sampled voltage signal, a comparator having a first input coupled to the output of the sample and hold circuit and a second input coupled to an output of the averaging circuit so as to compare the sampled voltage with the average sampled voltage signal and provide an output indicating a change in the sampled voltage.

In a preferred embodiment, the averaging circuit is an integrator. Preferably, a diode rectifier circuit is provided for rectifying the voltage provided to the input of the sample and hold circuit. The output of the comparator is preferably coupled to a digital filter which is controlled to pass the output to an output terminal of the demodulator circuit only when the sample and hold circuit is not sampling the voltage at the input terminal.

In another aspect, the invention provides a data transfer system having a tag including a secondary energy transceiver, a control circuit and a data memory, and a reader including a primary energy transceiver, a control circuit, a voltage source for applying voltage at a carrier frequency to the primary energy transceiver, and the demodulator circuit as described above, wherein the predetermined frequency is the carrier frequency and the input terminal is coupled to the primary energy transceiver.

Preferably, the primary and secondary energy trancsceivers comprise electromagnetic coils.

Brief Description Of The Drawings

One embodiment of the invention will now be more fully described, by way of example, with reference to the drawings, of which:

FIG. 1 shows an example of an application of the invention in a contactless data transfer system;
FIG. 2 shows a schematic block diagram of a contactless data transfer system according to one embodiment of the invention;
FIG. 3 shows in more detail part of the contactless data transfer system of FIG. 2;
FIG. 4 shows a timing diagram of the signals at various parts of the circuit shown in FIG. 3 for a phase modulation scheme;
FIG. 5 shows a timing diagram of the signals at various parts of the circuit shown in FIG. 3 for an amplitude modulation scheme
FIGS. 6, 7 and 8 show the digital signals at the inputs and output of the multiplexer of FIG. 3;

FIG. 9 shows a schematic diagram of part of a control circuit in the tag used in the system of FIG. 1 for an amplitude modulation scheme;

FIG. 10 shows a schematic diagram of part of a control circuit in the tag used in the system of FIG. 1 for a phase modulation scheme;

FIG. 11 shows equivalent LCR circuits for the coils in the tag and reader of FIG. 1; and

FIGS. 12 and 13 are graphs showing the frequency responses of the equivalent LCR circuit of FIG. 11 for the amplitude modulation scheme and phase modulation scheme of FIGS. 9 and 10, respectively.

Detailed Description

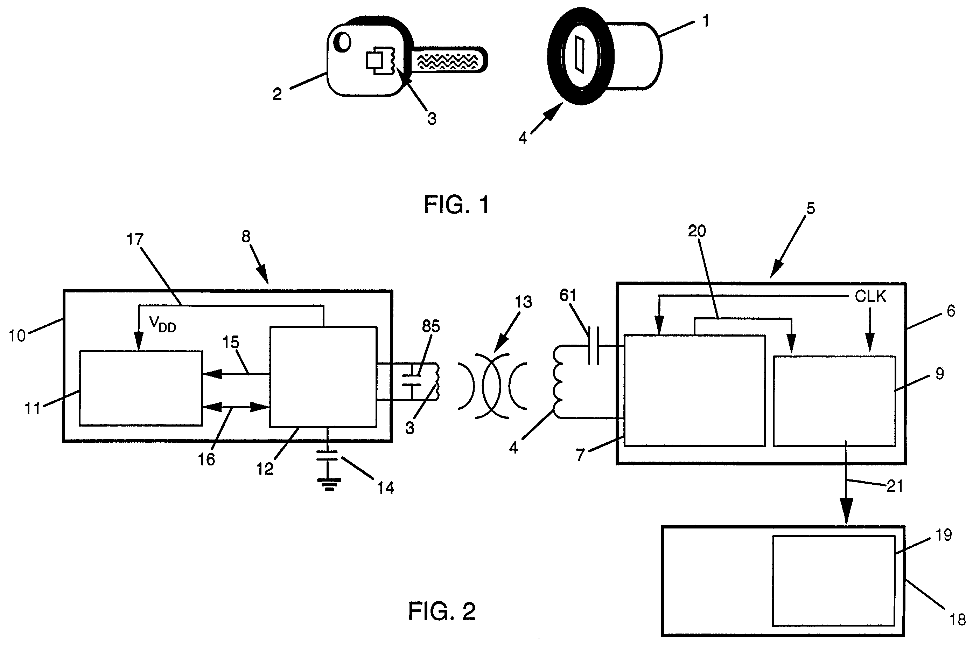

Thus, as shown in FIG. 1, an example of a short range data transfer system is an immobilizer system for an automotive vehicles in which an ignition key 2 is inserted into an ignition switch 1, or lock, in order to start the vehicle. Apart from the mechanical action of the key and lock, the key is provided with a miniature circuit and coil 3 to transfer data by magnetic interaction with the ignition switch, which also has a magnetic coil 4. It will, of course be appreciated that the mechanical interaction of the key and lock is not required and that only a proximity between the coils 3 and 4 is necessary for the system to operate. Accordingly, in the following description the term "tag" will be used to designate the electric circuit on the key side of the system and the term "reader" will be used to designate the lock side of the system.

As shown schematically in FIG. 2, the reader 5 includes a Microcontroller Unit (MCU) 6 having a physical interface 7 for driving the coil 4 and demodulating encrypted messages received from the tag 8 and an Encryption/Decryption cell 9 for decrypting the demodulated encrypted messages. The tag 8, which is generally in the form of an Application Specific Integrated Circuit (ASIC) 10, also includes an Encryption/Decryption cell 11, which may be similar to the Encryption/Decryption cell 9 of the reader 5, and is used to encrypt a plain text message, e.g. an identification code programmed in the tag, and a signal conditioning unit 12. The signal conditioning unit 12 is coupled to coil 3 and receives power from the reader 5 by magnetic coupling of the coils 3 and 4 as shown schematically at 13. The signal conditioning unit 12 modulates the message encrypted by the Encryption/Decryption cell 11 for sending by magnetic coupling to the reader 5.

As soon as the ignition key 2 with tag 8 is inserted in the ignition switch 1, the reader 5 is woken up. The MCU 6 generates a clock signal CLK at a frequency of 125 KHz, which is passed to both the Encryption/Decryption cell 9 and the physical interface 7 which generates a magnetic field in the coil 4 so as to transfer energy by magnetic coupling to the tag 8. The signal conditioning unit 12 extracts the clock frequency from the magnetic carrier and charges a reservoir capacitor 14 to provide power to supply the tag 8. As soon as there is enough energy in the reservoir capacitor 14, the Encryption/Decryption cell 11 is supplied with voltage $V_{DD}$ via power line 17 by the signal conditioning unit 12, which also provides the clock frequency on a clock signal line 15 to the Encryption/Decryption cell 11. The Encryption/Decryption cell 11 receives a plain text message including the identification code programmed in the tag and encrypts it using an encryption code, for example "X", clocked at the clock frequency and the encrypted message is transferred on data bus 16 to the signal conditioning unit 12. The encrypted message is then modulated by the signal conditioning unit 12 in order to be sent by magnetic coupling to the reader 5. The modulated signal is demodulated by the physical interface 7 of the reader 5 and transferred on bus 20 to the Encryption/Decryption cell 9, where the encrypted message is then decrypted using the same encryption code "X" used by the Encryption/Decryption cell 12 in the tag 8. The decrypted message is compared with identification parameters stored in an EEPROM or ROM to determine whether the tag is the correct one for the particular reader. If the decrypted message includes correct identification parameters, the tag is validated and a new plain text message generated by the plain text message (or another one stored in the EEPROM or ROM of the reader and indicating another identification code is sent to the Encryption/Decryption cell 9 to be encrypted using another encryption code, for example "Y". This new encrypted message is transferred via line 21 to the Engine Management Unit (EMU) 18 of the vehicle, where it is decrypted in another Encryption/Decryption cell 19 using the same encryption code "Y" to allow the EMU 16 to start the engine.

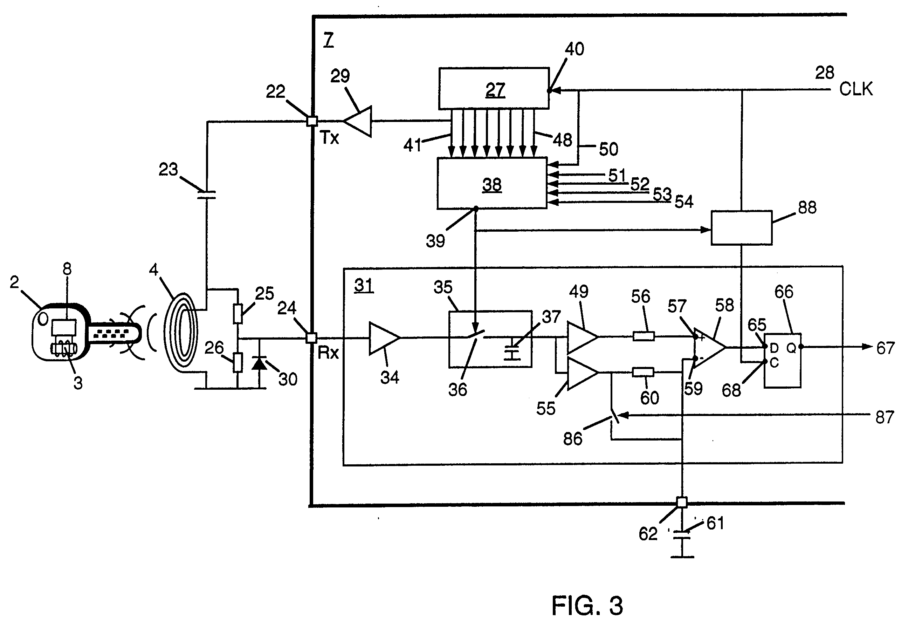

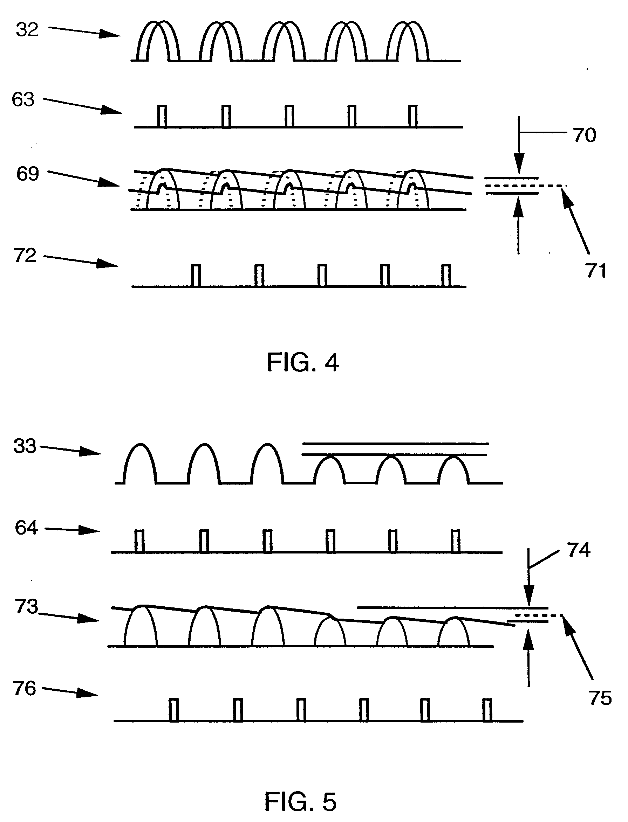

FIG. 3 shows, in more detail, the physical interface 7, having a transmit (Tx) port 22 coupled via a capacitor 23 to the reader coil 4, and a receive (Rx) port 24 coupled via a resistor network 25, 26 to the coil 4. The LC serial circuit formed by capacitor 23 and coil 4 is tuned to a frequency "$f_{or}$". A frequency generator 27 receives the internal clock signal CLK generated by the MCU, as at 28, and generates a standard frequency (125 KHz for car immobilizer applications) and provides, via amplifier 29, current for the coil 4 so that the key 2 can receive energy by magnetic coupling. Information coming from the key 2 is detected on coil inductance 4, and the signal across the resistor network 25, 26 is rectified using either a diode 30 or the intrinsic diode of the IC substrate before being digitally processed by the demodulator 31. The resistor network 25, 26 is connected across the coil 4 in order to limit the voltage level provided by the LC tuned circuit 23, 4. The rectified signal at the receive port 24 is shown in the top graph 32 of FIG. 4 for a phase modulation scheme and in top graph 33 of FIG. 5 for an amplitude modulation scheme, the type of modulation being dependent on that implemented in the tag, as will be more fully described hereinafter.

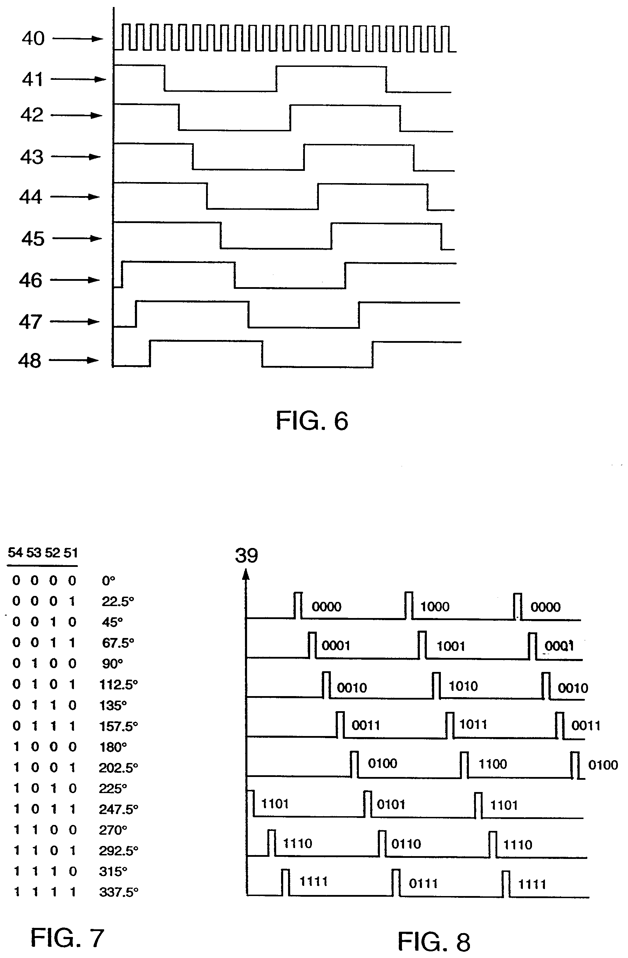

The demodulator 31 includes a current amplifier buffer circuit 34 coupled to the receive port 24 to obtain a low signal impedance, which is required for a sample & hold circuit 35 formed by switch 36 and holding capacitor 37. The sample & hold circuit 35 is driven synchronously using the shifted carrier frequency from frequency generator 27 via a multiplexer circuit 38 to control the on/off time of switch 36. Frequency generator 27 receives the clock signal CLK at input 40 and produces 8 outputs 41, 42, ... 48 of one eighth the clock frequency, but each shifted by one clock phase, as shown in FIG. 6. The eight outputs 41, 42, ... 48 of the frequency generator 27 are supplied to the multiplexer 38. The output 39 of multiplexer 38 is selected according to 4 inputs 51, 52, 53, 54, clocked by clock input 50. The 4 inputs 51, 52, 53, 54 are provided by the MCU according to a look up table in order to obtain the best signal sensitivity at the sample and hold circuit 35. The resolution is determined by the bits of the 4 inputs 51, 52, 53, 54, as shown in the look-up table in FIG. 7, applied to 360° of the shifted carrier frequency shown in FIG. 6 to produce pulse signals, as shown in FIG. 8, having 22.5° of resolution. Providing a delayed modulo 22.5° pulse signal at output 39 allows the best signal sensitivity to be detected. The signal at output 39 is shown in graphs 63 and 64 of FIGS. 4 and 5, respectively. Cancelling of the carrier frequency is done by the use of the sample & hold circuit 35 based on synchronous correlation theory. This technique represents a very important advantage in term of the numbers of passive and active components required, as compared to a classical solution that would use low pass filters in a daisy chain since 80 dB/dec. are necessary for the present application. The tuning of the sample & hold circuit 35 is achieved in this embodiment by multiplexer 38 and allows for compensation of all shift phases of whatever origin used during the validation sequence.

The voltage level on the sample & hold circuit 35 corresponds to the modulated signal coming from the tag. A first buffer 49 receives the modulated output from the sample and hold circuit 35 and is used to drive one input 57 of a comparator 58 via a resister 56. A second buffer 55 receives the modulated output from the sample and hold circuit 35 and is used to drive a second input 59 of the comparator 58 via an integrator formed by a resister 60 and an external capacitor 61 connected via terminal 62. The voltage level of the modulated signal at the first input 57 of the comparator 58 is compared to the mean value of this voltage level produced by the integrator at second input 59 of the comparator 58. The output of the comparator 58 is latched at a D input 65 of a flip-flop 66, which is synchronised, at Clock input 68, with the output of a delay circuit 88, whose input is taken from the output 39 of the nultiplexer 38 and clocked from the internal clock signal 28, in order to validate the output signal of comparator 58 and avoid undesirable transients appearing at the output of comparator 58. The output 67 of flip-flop 66 therefore provides the demodulated signal representing the information sent by the tag. A switch 86 is provided between the output of buffer 55 and the external capaciter 61. The switch 86 is controlled by an input signal 87 to the physical interface 7 so as to provide fast energisation of the capacitor 61 during the initialisation procedure.

As shown in FIG. 4, for phase modulation, graph 69 illustrates the ripple signals at the outputs of buffers 49 and 55 with the amplitude variation 70 following the Baud rate generated by the tag, the mean value 71 of which, created by the low pass filter formed by resistor 60 and capacitor 61, is passed to the second input of the comparator 58. Graph 72 of FIG. 4 shows the validation clock signal applied to clock input 68 of flip-flop 66 to latch the input 65. Graph 73 of FIG. 5 shows, for amplitude modulation, the ripple signals at the outputs of buffers 49 and 55 with the amplitude variation 74 again following the Baud rate generated by the tag. The mean value 75, created by the low pass filter formed by resistor 60 and capacitor 61, is passed to the second input of the comparator 58. Graph 76 of FIG. 5 shows the validation clock signal applied to clock input 68 of flip-flop 66 to latch input 65.

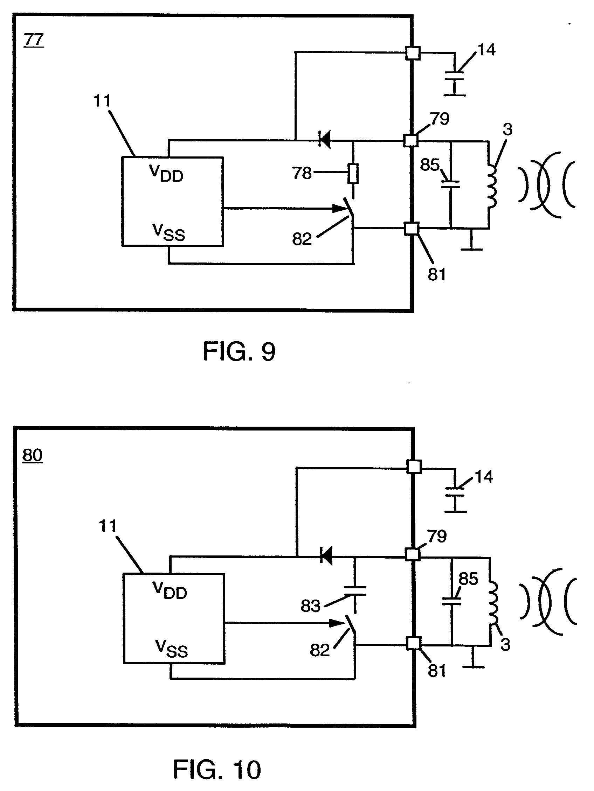

Turning now to FIGS. 9 and 10, these show, schematically, tags 77 and 80, respectively, which are similar to tag 8 of FIG. 2, each having an LC parallel circuit, composed of the tag coil 3 having an inductance L and a capacitor 85 having capacitance C coupled across the coil 3, tuned on frequency "$f_{ot}$". Thus, "$f_o$" being the resonance frequency of an LC circuit, "$f_{or}$" is the resonant frequency of the reader LC circuit and "$f_{ot}$" is the resonant frequency of the tag LC circuit. In general, "$f_{ot}$" and "$f_{or}$" are matched. The task of these LC circuits is to transfer energy sent by magnetic coupling from the reader 5 to the tag 8 to be stored in external capacitor 14, as described above. Once the stored energy is sufficient, the tags 77 and 80 become operational and are able to send or receive information to or from the reader 5. When the tags 77 and 80 send information to the reader 5, this information can be modulated by using either an Amplitude Modulation (AM) scheme, as shown in FIG. 9 or a Phase Modulation (PM) scheme, as shown in FIG. 10.

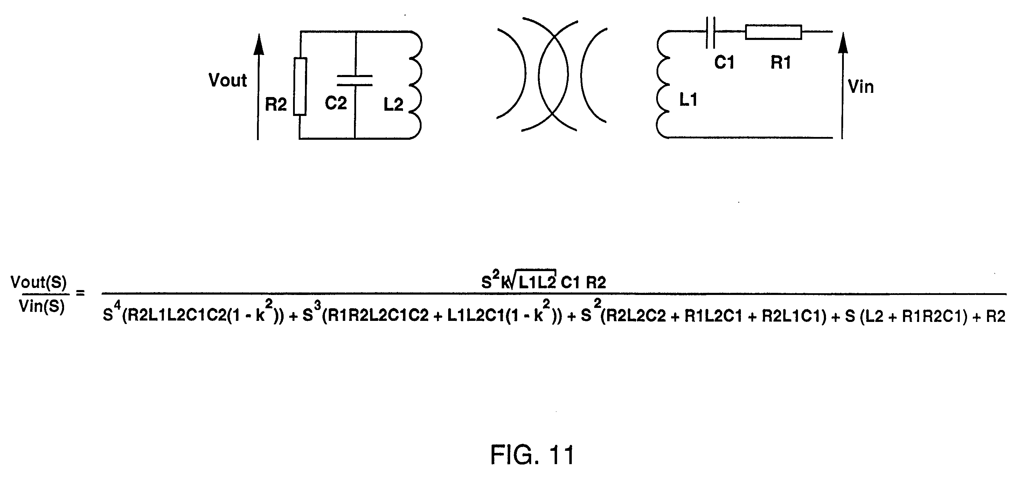

For the vehicle immobilizer application described, the equivalent LCR circuit model for the tag 8 and the reader 5 is shown in FIG. 11, where R1 is the equivalent resistance of the reader;

C1 is the equivalent capacitance of the reader;
L1 is the equivalent inductance of the reader;
R2 is the equivalent resistance of the tag;
C2 is the equivalent capacitance of the tag;
L2 is the equivalent inductance of the tag; and
M is the magnetic coupling transfer function given by:

$$M = k.\sqrt{L1L2}$$

where k is a transfer constant.

The ratio between the input (Vin) and output (Vout) voltages can therefore be deduced from the equivalent LCR circuit model using the equation:

$$\frac{Vout(S)}{Vin(S)} = \frac{b_0 S^2}{a_4 S^4 + a_3 S^3 + a_2 S^2 + a_1 S + a_0}$$

where

S is the Laplace Transform;
$b_0$ is M.C1.R2;
$a_0$ is R2;
$a_1$ is L2 + R1.R2.C1;
$a_2$ is R2.L2.C2 + R1.L2.C1 + R2.L1.C1;
$a_3$ is R1.R2.L2.C1.C2 + L1.L2.C1 (1 - $k^2$); and
$a_4$ is R2.L1.L2.C1.C2 (1 - $k^2$),

so that the full equation is as shown in FIG. 11.

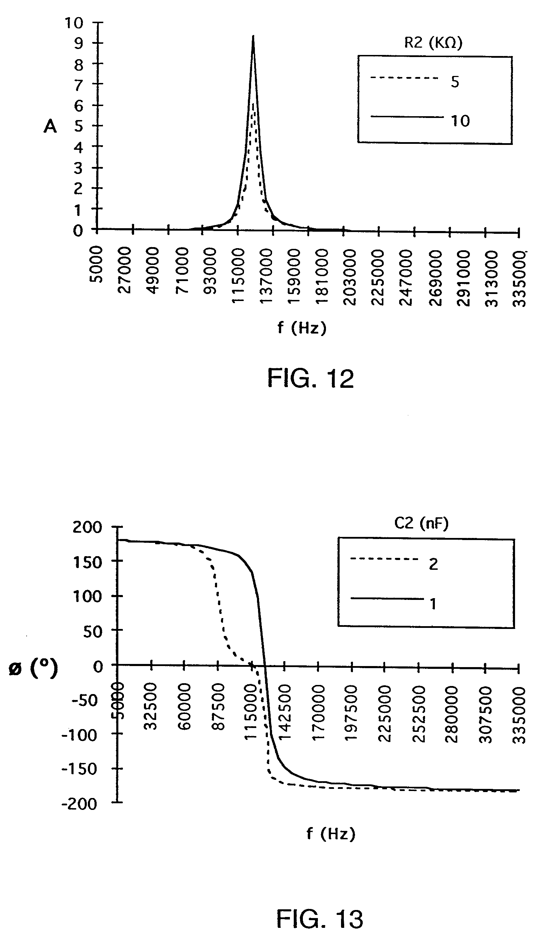

For the Amplitude Modulation scheme shown in FIG. 9, a load resistor 78 is coupled across the LC circuit via terminals 79 and 81 and is switched by switch 82 according to the baud rate of data from the output of the Encryption/Decryption cell 11. The rectified signal at the receive port 24 of the physical interface 7 in FIG. 3 is thus an amplitude modulated signal. FIG. 12 shows the amplitude A of the received rectified signal as a function of frequency (f) for values of the load resistor R2 in the above equations of 10 K$\Omega$ and 5 K$\Omega$.

For the Phase Modulation scheme shown in FIG. 10, a capacitor 83 is coupled across the LC circuit via terminals 79 and 81 and is switched by switch 82 according to the baud rate of data from the output of the Encryption/Decryption cell 11. The rectified signal at the receive port 24 of the physical interface 7 in FIG. 3 is thus a phase modulated signal. FIG. 13 shows the phase variation $\varnothing$ of the received rectified signal as a function of frequency (f) for values of the capacitor C2 in the above equations of 1 nF and 2 nF.

It will be apparent, therefore, that the invention described above can be easily integrated in a MCU or ASIC technology. The invention is particularly useful for systems based on data transfer between two entities and using magnetic coupling, such as immobilizer systems, material handling, identification, remote metering, ticketing, credit or smart cards, etc. However, the invention is not limited to systems using magnetic coupling but is applicable to systems providing energy and data transfer by other contactless means, such as by light, or to those systems in which the transfer takes place by actual physical connections, i.e. not contactless systems. Furthermore, it will be appreciated that, although the invention has been described with the demodulating circuit in the reader, if it is desired that the tag should be able to receive data from the reader, then a similar demodulating circuit could be implemented in the tag.

It will be appreciated that although only one particular embodiment of the invention has been described in detail, various other modifications and improvements can be made by a person skilled in the art without departing from the scope of the present invention.

## Claims

1. A demodulator circuit comprising an input terminal for receiving a modulated data signal, a sample and hold circuit having an input coupled to the input terminal for sampling the voltage at the input terminal, a delay control unit coupled to the sample and hold circuit for controlling the sampling of the voltage at the input terminal to take place at a predetermined frequency, an averaging circuit coupled to an output of the sample and hold circuit for providing an average sampled voltage signal, a comparator having a first input coupled to the output of the sample and hold circuit and a second input coupled to an output of the averaging circuit so as to compare the sampled voltage with the average sampled voltage signal and provide an output indicating a change in the sampled voltage.

2. A demodulator circuit suitable for a data transfer system having a first side including a primary energy transceiver, a control circuit and a voltage source for applying voltage at a carrier frequency to the primary energy transceiver and a second side including a secondary energy transceiver, a control circuit and a data memory, the demodulator circuit comprising an input terminal for coupling to one of the energy transceivers, a sample and hold circuit having an input coupled to the input terminal for sampling the voltage at the input terminal, a delay control unit coupled to the sample and hold circuit for controlling the sampling of the voltage at the input terminal to take place at the carrier frequency, an averaging circuit coupled to an output of the sample and hold circuit for providing an average sampled voltage signal, a comparator having a first input coupled to the output of the sample and hold circuit and a second input coupled to an output of the averaging circuit so as to compare the sampled voltage with the average sampled voltage signal and provide an output indicating a change in the sampled voltage.

3. A demodulator circuit according to either claim 1 or claim 2, wherein the averaging circuit is an integrator.

4. A demodulator circuit according to any preceding claim, further comprising a diode rectifier circuit for rectifying the voltage provided to the input of the sample and hold circuit.

5. A demodulator circuit according to any preceding claim, wherein the output of the comparator is coupled to a digital filter which is controlled to pass its output to an output terminal of the demodulator circuit only when the sample and hold circuit is not sampling the voltage at the input terminal.

6. A data transfer system having a tag including a secondary energy transceiver, a control circuit and a data memory, and a reader including a primary energy transceiver, a control circuit, a voltage source for applying voltage at a carrier frequency to the primary energy transceiver, and a demodulator circuit comprising an input terminal coupled to the primary energy transceiver, a sample and hold circuit having an input coupled to the input terminal for sampling the voltage at the input terminal, a delay control unit coupled to the sample and hold circuit for controlling the sampling of the voltage at the input terminal to take place at the carrier frequency, an averaging circuit coupled to an output of the sample and hold circuit for providing an average sampled voltage signal, a comparator having a first input coupled to the output of the sample and hold circuit and a second input coupled to an output of the averaging circuit so as to compare the sampled voltage with the average sampled voltage signal and provide an output indicating a change in the sampled voltage.

7. A data transfer system according to claim 6, wherein the primary and secondary energy trancsceivers comprise electromagnetic coils.

8. A data transfer system according to either claim 6 or claim 7, wherein the averaging circuit is an integrator.

9. A data transfer system according to any one of claims 6, 7 or 8, further comprising a diode rectifier circuit for rectifying the voltage provided to the input of the sample and hold circuit.

10. A data transfer system according to any one of claims 6 to 9, wherein the output of the comparator is coupled to a digital filter which is controlled to pass its output to an output terminal of the demodulator circuit only when the sample and hold circuit is not sampling the voltage at the input terminal.

EP 0 745 747 A1

FIG. 2

FIG. 1

7

FIG. 3

FIG. 4

FIG. 5

40 →
41 →
42 →
43 →
44 →
45 →
46 →
47 →
48 →

FIG. 6

| 54 | 53 | 52 | 51 | |
|---|---|---|---|---|
| 0 | 0 | 0 | 0 | 0° |
| 0 | 0 | 0 | 1 | 22.5° |
| 0 | 0 | 1 | 0 | 45° |
| 0 | 0 | 1 | 1 | 67.5° |
| 0 | 1 | 0 | 0 | 90° |
| 0 | 1 | 0 | 1 | 112.5° |
| 0 | 1 | 1 | 0 | 135° |
| 0 | 1 | 1 | 1 | 157.5° |
| 1 | 0 | 0 | 0 | 180° |
| 1 | 0 | 0 | 1 | 202.5° |
| 1 | 0 | 1 | 0 | 225° |
| 1 | 0 | 1 | 1 | 247.5° |
| 1 | 1 | 0 | 0 | 270° |
| 1 | 1 | 0 | 1 | 292.5° |
| 1 | 1 | 1 | 0 | 315° |
| 1 | 1 | 1 | 1 | 337.5° |

FIG. 7

39

| 0000 | 1000 | 0000 |
| 0001 | 1001 | 0001 |
| 0010 | 1010 | 0010 |
| 0011 | 1011 | 0011 |
| 0100 | 1100 | 0100 |
| 1101 | 0101 | 1101 |
| 1110 | 0110 | 1110 |
| 1111 | 0111 | 1111 |

FIG. 8

FIG. 9

FIG. 10

$$\frac{Vout(S)}{Vin(S)} = \frac{S^2 k\sqrt{L1L2}\, C1\, R2}{S^4(R2L1L2C1C2(1-k^2)) + S^3(R1R2L2C1C2 + L1L2C1(1-k^2)) + S^2(R2L2C2 + R1L2C1 + R2L1C1) + S(L2 + R1R2C1) + R2}$$

FIG. 11

EP 0 745 747 A1

FIG. 12

FIG. 13

13

**European Patent Office**

## EUROPEAN SEARCH REPORT

Application Number

EP 96 10 8202

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-4 276 539 (ESHRAGHIAN,BOGNER)<br>* column 3, line 9 - line 50; figure 1 *<br>--- | 1,2,6,7 | E05B49/00<br>B60R25/04<br>H04L27/06<br>H04L27/227<br>H04L25/06 |
| A | FR-A-2 603 933 (ESPINADEL,MOREL)<br>* page 1, line 17 - page 3, line 20; figure 1 *<br>--- | 1,2,6,7 | |
| A | DE-U-93 19 428 (GRUNDIG E.M.V.)<br>* page 4, line 25 - page 6, line 14; figures 1-3 *<br>--- | 1-3 | |
| P,A | EP-A-0 710 756 (SIEMENS)<br>* page 2, line 38 - page 5, line 34; figures 1-7 *<br>----- | 1,2,6,7 | |

TECHNICAL FIELDS SEARCHED (Int.Cl.6)

E05B
B60R
H04L

The present search report has been drawn up for all claims

| Place of search | Date of completion of the search | Examiner |
|---|---|---|
| THE HAGUE | 21 August 1996 | Herbelet, J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)